# EUROPÄISCHE PATENTANMELDUNG

(11) **EP 1 049 026 A2**
(43) Veröffentlichungstag der Anmeldung: **02.11.2000**
(21) Anmeldenummer: 00108305.4
(22) Anmeldetag: 15.04.2000
(51) Int. Cl.: G06F 17/30

(54) **System und Verfahren zum Abruf von Daten aus einer Datenbank**

(30) Priorität: 18.04.1999 DE 19917344
(71) Anmelder: AryoNet Systemhaus GmbH, 57627 Hachenburg (DE); InterNetX GmbH, 93047 Regensburg (DE)
(72) Erfinder: Pál, Simon, D-57627 Hachenburg (DE)

(57) **Zusammenfassung**

Die Erfindung betrifft ein Verfahren und ein System zum Abruf von Daten aus einer Datenbank (2), insbesondere im Internet, mit einem Datenabruf-Endgerät (1), das eine optische Anzeige-Einrichtung (11) und mindestens eine Dateneingabe-Einrichtung (12, 13) aufweist, wobei das Datenabruf-Endgerät (1) ein Steuerwerk (1MP) mit einem zugeordneten Steuerungsprogramm aufweist. Dieses ist in der Weise ausgestaltet, daß auf der optischen Anzeige-Einrichtung (11) erste Informationselemente anzeigbar sind, die mittels der Dateneingabe-Einrichtung (12, 13) durch eine erste Markierung markierbar sind, wobei ausgelöst durch die erste Markierung eines ersten Informationselements eine Verbindung zu der Datenbank (2) hergestellt wird, Daten aus der Datenbank (2) abgerufen und zu dem Datenabruf-Endgerät (1) übertragen werden. Durch die erste Markierung der ersten Informationselemente werden anstelle einer Verbindung zu der Datenbank (2) zweite Informationselemente auf der optischen Anzeige-Einrichtung (11) angezeigt.

Um dem Benutzer eine gezielte Auswahl abzurufender Daten zu ermöglichen, ist erfindungsgemäß vorgesehen, daß das Steuerungsprogramm in der Weise ausgestaltet ist, daß ausgelöst durch eine zweite Markierung eines zweiten Informationselements eine Verbindung zu der Datenbank (2) hergestellt wird, Daten aus der Datenbank (2) abgerufen und zu dem Datenabruf-Endgerät (1) übertragen werden.

## Beschreibung

### Hintergrund der Erfindung

Die Erfindung bezieht sich auf ein System und Verfahren zum Abruf von Daten aus einer Datenbank nach dem Oberbegriff des Anspruchs 1 bzw. 7.

### Stand der Technik

Der Internet-Dienst World Wide Web (WWW) ermöglicht es seinen Benutzern in vergleichsweise einfacher Weise, auf den Bildschirmen ihrer Personalcomputer Seiten (pages) von im WWW erreichbaren Rechnern (Servern) anzuzeigen. Dr Abruf der Seiten erfolgt mittels eines Programms in Form eines sogenannten Web- bzw. WWW-Browsers (z.B. Internet Explorer von Microsoft oder Navigator von Netscape).

Die vorgenannten Seiten können neben Text und Grafiken auch sogenannte Verweise (Hyperlink, LINK) enthalten, die es ermöglichen, durch Anklicken mittels einer Maus zu einer vorgebbaren Seite im Internet zu gelangen, ohne daß eine Zieladresse (URL) der Seite in Form von alphanumerischen Zeichen einzugeben ist.

Die Verweise (Hyperlinks, Links) bestehen zum Beispiel aus unterstrichenen Worten (z.B. FIRMA X) oder aus sogenannten Bannern, die üblicherweise die Form eines rechteckförmigen Fensters haben, das eine Grafik umschließt.

Es ist bekannt, durch Markieren eines Verweises durch Doppelklicken mit der Maus zu einer vorgebbaren Seite im Internet zu gelangen. Beispielsweise führt im Lycos-Suchserver ein Markieren des Hyperlinks 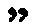 Wissenschaft" zu einer Seite mit mehreren Hyperlinks, unter anderem mit dem Hyperlink 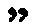 Naturwissenschaften". Wird dieser Hyperlink markiert, wird eine Seite abgerufen, die mehrere Katalogeinträge enthält, unter anderem den Katalogeintrag 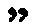 Astronomie de". Durch dessen Markierung lassen sich Seiten von WWW-Servern aufrufen, die sich mit der Thematik Astronomie befassen.

Es sind auch Verweise bekannt, die durch Einmal-Klicken mit der Maus zur Anzeige einer Zusatzinformation führen. Diese Zusatzinformation enthält Angaben zum Inhalt der abrufbaren Seite bzw. Seitensequenz. Durch Doppel-Klicken mit der Maus wird dann die jeweilige Seite bzw. Seitensequenz abgerufen. Die entsprechende Datenmenge, die zu dem Personal Computer des Benutzers übertragen wird, kann vergleichsweise groß sein, so daß entsprechend lange Übertragungszeiten erforderlich sind. Bei langen Übertragungszeiten neigen Benutzer, die keine Kenntnis über die noch verbleibende Übertragungszeit haben, vielfach dazu, die andauernde Übertragung zu unterbrechen. stoppen. Ein weiterer Nachteil der Übertragung vergleichsweise großer Datenmengen besteht darin, daß Benutzer in vielen Fallen nicht an der Gesamtmenge der zu übertragenden bzw. zu übertragenen Datenmenge, sondern nur an einem Teil dieser Daten interessiert sind.

### Aufgabe der Erfindung

Ausgehend von diesem Stand der Technik liegt der Erfindung der Aufgabe zugrunde, ein System und ein Verfahren der eingangs genannten Art anzugeben, die auf die Bedürfnisse von Benutzern abgestimmte Abrufprozeduren ermöglichen.

Diese Aufgabe wird erfindungsgemäß durch ein System und ein Verfahren gelöst, die in den Ansprüchen definiert sind.

Die Erfindung weist eine Mehrzahl von Vorteilen auf:
Das erfindungsgemäße System ermöglicht es, anstelle einer Verbindung zu einer WEB-Seite oder zu einer Vielzahl von WEB-Seiten Informationen anzuzeigen, die sich auf diese WEB-Seite(n) beziehen, und dann gezielt eine oder mehrere WEB-Seiten aufzurufen. Damit wird der Benutzer in die Lage versetzt, gezielt WEB-Seiten auszuwahlen. Damit spart der Benutzer Zeit (Wartezeit während der Übertragung und Zeit zur Bearbeitung übertragener Daten, die sich als irrelevant für den Benutzer herausstellen) und Verbindungskosten sowie gegebenenfalls Kosten für den Abruf der betreffenden nicht relevanter WEB-Seiten. Zugleich wird das Verbindungsnetz in einem entsprechend geringeren Umfang belastet, so daß auch die Gemeinschaft der Netzbenutzer von der Erfindung profitiert.

Eine weitere vorteilhafte Ausführungsform des erfindungsgemäßen Systems ist dadurch gekennzeichnet, daß das Datenabruf-Endgerät (Personal Computer) im Rahmen einer Datenabrufprozedur eine zweite Information (INFDAT2) an die Datenbank oder z.B. einen SERVER übermittelt, wobei diese Information eine vorgebbare Datenkapazität einer ersten vorgebbaren Datei bezeichnet, die eine Informationsuntermenge der Informationen einer abrufbaren Seite bzw. Seitensequenz darstellt. Erfindungsgemäß werden von der Datenbank und/oder von dem SERVER zu dem Datenabruf-Endgerät nur Daten übermittelt, deren Kapazität maximal gleich der Datenkapazität ist, die durch die zweite Information (INFDAT2) bezeichnet ist. Der Benutzer kann auch die maximale Übertragungszeit und damit die Datenmenge bestimmen.

Damit bestimmt der Benutzer den Umfang der Informationen, die er erhalten will, und damit die Wartezeit, bis diese Informationen eintreffen, sowie die hierfür anfallenden Kosten (Verbindungskosten, Datenbank-Nutzungsgebühren). Damit werden im Stand der Technik häufig auftretende Situationen vermieden, in denen der Benutzer Informationen erhält die sich bei späterer Betrachtung als uninteressant erweisen, bzw. in denen der Benutzer eine laufende Datenübertragung unterbricht.

Weitere vorteilhafte Ausführungsformen der Erfindung sind in den Unteransprüchen gekennzeichnet.

Die Erfindung wird nun anhand der Zeichnungen beschrieben.

### Kurze Beschreibung der Zeichnung

Es zeigt
- Figur 1: schematisch Komponenten des erfindungsgemäßen Systems,
- Figur 2: ein Blockdiagramm des erfindungsgemäßen Systems nach Figur 1; und
- Figur 3 und 4: Beispiele von Anzeigen auf einer optischen Anzeigeeinrichtung eines Datenabruf-Endgeräts in einem System nach Figur 1.

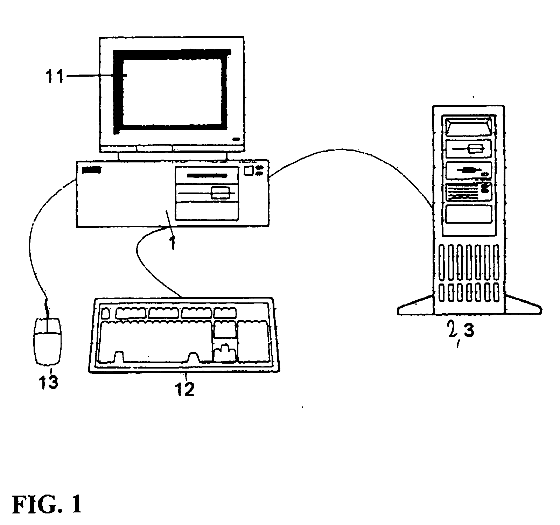

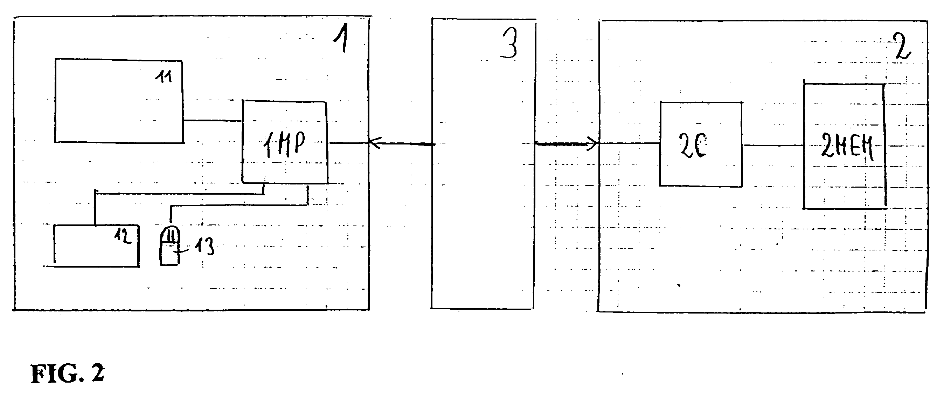

Das in den Figuren 1 und 2 dargestellte System weist mindestens ein Datenabruf-Endgerät 1 und eine Datenbank 2 auf. Das Datenabruf-Endgerät 1 ist insbesondere ein handelsüblicher Personal Computer mit einer optische Anzeige-Einrichtung 11 (Bildschirm) und mindestens einer Dateneingabe-Einrichtung 12 (Tastatur, Keyboard), 13 (Maus).

Wie in Figur 2 dargestellt ist, weist die Datenbank 2 mindestens ein Steuerwerk 2C sowie einen Speicher 2MEM auf.

Das Datenabruf-Endgerät 1 und die Datenbank 2 sind insbesondere in das Internet integriert, wobei ein Server 3 zwischen Endgerät 1 und Datenbank 2 geschaltet ist und wobei die Datenbank auf einem Massenspeicher des Servers implementiert sein kann.

Das Datenabruf-Endgerät 1 hat ein Steuerwerk 1MP mit einem zugeordneten Steuerungsprogramm, das in an sich bekannter Weise in der Weise ausgestaltet ist, daß auf dem Bildschirm 11 sogenannte Links ( 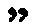 erste Informationselemente LINK") anzeigbar sind, wobei diese ersten Informationselemente LINK mittels einer Dateneingabe-Einrichtung 12, 13 durch eine erste Markierung markierbar sind. Ausgelöst durch die erste Markierung eines ersten Informationselements LINK wird in an sich bekannter Weise eine Verbindung über einen Server 3 zu der Datenbank 2 hergestellt Aus der Datenbank 2 werden dem markierten ersten Informationselement zugeordnete Daten abgerufen und zu dem Datenabruf-Endgerät 1 übertragen.

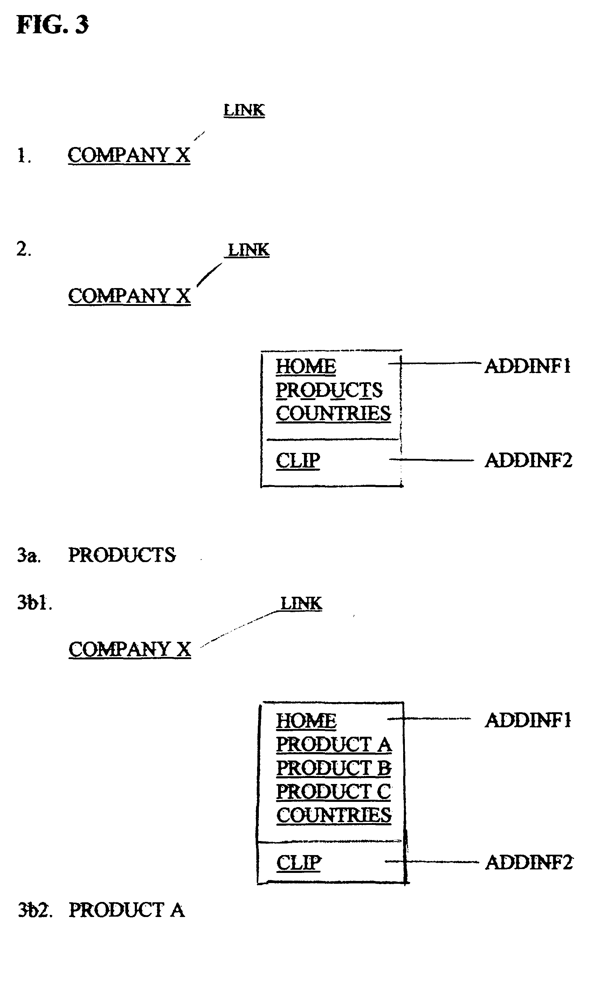

Im erfindungsgemäßen System ist das Steuerungsprogramm des Datenabruf-Endgeräts weiterhin in der Weise ausgestaltet, daß ausgelöst durch die erste Markierung eines ersten Informationselements LINK anstelle einer Verbindung zu der Datenbank 2 zweite Informationselemente ADDINF1, ADDINF2, ... auf der optischen Anzeige-Einrichtung 11 angezeigt werden. Ein Beispiel einer solchen Anzeige wird anhand von Figur 3 noch beschrieben.

Im erfindungsgemäßen System ist das Steuerungsprogramm in der Weise ausgestaltet, daß erst ausgelöst durch eine zweite Markierung eines zweiten Informationselements ADDINF21 mittels einer Dateneingabe-Einrichtung 12, 13 eine Verbindung zu der Datenbank 2 hergestellt wird. Daten, die dem markierten zweiten Informationselement ADDINF1 zugeordnet sind, werden aus der Datenbank 2 abgerufen und zu dem Datenabruf-Endgerät 1 übertragen.

Alternativ hierzu kann vorgesehen sein, das Steuerungsprogramm in der Weise ausgestaltet, daß ausgelöst durch die zweite Markierung eines zweiten Informationselements ADDINF21 mittels einer Dateneingabe-Einrichtung 12, 13 dritte Informationselemente auf der optischen Anzeige-Einrichtung 11 angezeigt werden. In diesem Fall wird erst ausgelost durch eine dritte Markierung eines dritten Informationselements mittels der Dateneingabe-Einrichtung 12, 13 eine Verbindung zu der Datenbank 2 hergestellt und es werden Daten, die dem markierten dritten Informationselement zugeordnet sind, aus der Datenbank 2 abgerufen und zu dem Datenabruf-Endgerät 1 übertragen.

Insbesondere ist die mindestens eine Dateneingabe-Einrichtung 13 eine Maus. Das schon erwähnte Steuerungsprogramm ist in folgenden Weise ausgestaltet: durch ein Einmal-Klicken mindestens einer Maus-Taste wird die schon erwähnte erste Markierung der ersten Informationselemente (LINK) realisiert, während durch ein Doppel-Klicken mindestens einer Maus-Taste eine zweite Markierung der ersten Informationselemente (LINK) realisiert wird. Bei dieser Ausführungsform des erfindungsgemäßen Systems bzw. Verfahrens wird ausgelöst durch die zweite Markierung eines ersten Informationselements (LINK) eine Verbindung zu der Datenbank 2 hergestellt. Nach der Verbindungsherstellung werden Daten aus der Datenbank 2 abgerufen und zu dem Datenabruf-Endgerät 1 übertragen.

Vorzugsweise ist das Steuerungsprogramm in der Weise ausgestaltet, daß die ersten Informationselemente mindestens zwei Teile aufweisen, die individuell markierbar sind, und daß individuelle Markierungen von Informationselementteilen zu der Anzeige zweiter Informationselemente (ADDINF1, ...) und/oder zu einer Verbindung zu der Datenbank 2 führen.

Bei den aus der Datenbank 2 abgerufenen Daten handelt es sich in an sich bekannter Wiese um alphanumerische Zeichen, Graphik-Daten und/oder Graphik-Datensequenzen (sogenannte Videos oder Clips).

Dem Datenabruf-Endgerät 1 kann in an sich bekannter Weise eine Einrichtung zur Wiedergabe akustischer Daten zugeordnet sein. Damit lassen sich aus der Datenbank 2 Daten abrufen, die auf der vorstehend genannten Einrichtung wiedergebbar sind.

Das erfindungsgemäße System kann auch in seiner Software in der Weise ausgestaltet sein, daß das Datenabruf-Endgerät 1 im Rahmen einer Datenabrufprozedur eine erste Information INFDAT1 an die Datenbank 2 übermittelt, die eine vorgebbare erste Datei bezeichnet. Weiterhin übermittelt das Datenabruf-Endgerät 1 im Rahmen derselben oder einer weiteren Datenabrufprozedur eine zweite Information INFDAT2 an die Datenbank 2, die eine vorgebbare Datenkapazität des ersten vorgebbaren Datei bezeichnet. Entsprechend der zweiten Information INFDAT2 übermittelt die Datenbank 2 zu dem Datenabruf-Endgerät 1 Daten des ersten Datei, deren Kapazität maximal gleich der Datenkapazität ist, die durch die zweite Information INFDAT2 bezeichnet ist.

In diesem Zusammenhang kann das der Datenbank 2 zugeordnete Steuerwerk 2CP in Abhängigkeit der von dem Datenabruf-Endgerät 1 übermittelten zweiten Information INFDAT2 Daten aus der erste Datei selektieren, beispielsweise die Daten, die am Anfang der Datei angeordnet sind, wobei bei einer weiteren Abrufprozedur mit einer weiteren Information INFDAT2, die wiederum die Kapazität einer abzurufenden Datenmenge bezeichnet, weitere Daten der ersten Datei abrufbar sind.

Alternativ zu der vorstehend beschriebenen Selektion von Daten entsprechend ihrer Anordnung in der ersten Datei können auch jeweils Daten gebildet werden, die einerseits die Bedingung erfüllen, daß ihre Kapazität maximal gleich du Datenkapazität ist, die durch die zweite Information INFDAT2 bezeichnet ist, und die andererseits jeweils einen Überblick über den Gesamtinhalt der ersten Datei geben.

In Figur 3 zeigt eine Abfolge unterschiedlicher Anzeigen, die auf der optischen Anzeige-Einrichtung 11 dargestellt werden. Figur 3.1. zeigt ein erstes Informationselement LINK, das COMPANY X lautet.

Im Stand der Technik wird durch eine Markierung von LINK z.B mittels einer Maus eine Verbindung zu einer Datenbank hergestellt und im Rahmen der hergestellten Verbindung werden Daten abgerufen. Durch eine Markierung der ersten Informationselemente (LINK) können auch zweite Informationselemente (Zusatzinformationen zu den abrufbaren Daten) auf der optischen Anzeige-Einrichtung 11 angezeigt werden. Demgegenüber sind in dem erfindungsgemaßen System die zweiten Informationselemente ADDINF1 (HOME; PRODUCTS, COUNTRIES), ADDINF2 (CLIP), die z.B. in Figur 3.2 dargestellt sind, durch eine zweite Markierung markierbar.

Es sind beispielsweise zwei Arten der zweiten Markierung realisierbar, die einerseits zu der Anzeige in Figur 3.3a. und andererseits zu der Anzeige in Figur 3.3b1 führen.

Wie anhand der Anzeige in Figur 3.3.a dargestellt ist, kann ausgelöst durch die zweite Markierung eines zweiten Informationselements ADDINF1 (z. B. PRODUCTS) eine Verbindung zu der Datenbank hergestellt werden, die entsprechenden Daten aus der Datenbank abgerufen, zu dem Datenabruf-Endgerät 1 übertragen und dort auf der optischen Anzeige-Einrichtung 11 angezeigt werden. Diese Anzeige (PRODUCTS) ist in Figur 3.3a. dargestellt.

Wie anhand der Anzeige in Figur 3.3b1 dargestellt ist, kann ausgelöst durch die zweite Markierung eines zweiten Informationselements ADDINF1 (z. B. PRODUCTS) eine Anzeige von PRODUCT A, PRODUCT B, PRODUCT C auf der optischen Anzeige-Einrichtung 11 generiert werden. Durch Markierung von PRODUCT A z.B. mittels der Maus wird eine Verbindung zu der Datenbank hergestellt, die entsprechenden Daten werden aus der Datenbank abgerufen, zu dem Datenabruf-Endgerät 1 übertragen und dort auf der optischen Anzeige-Einrichtung 11 angezeigt. Diese Anzeige (PRODUCT A) ist in Figur 3.3b2. dargestellt.

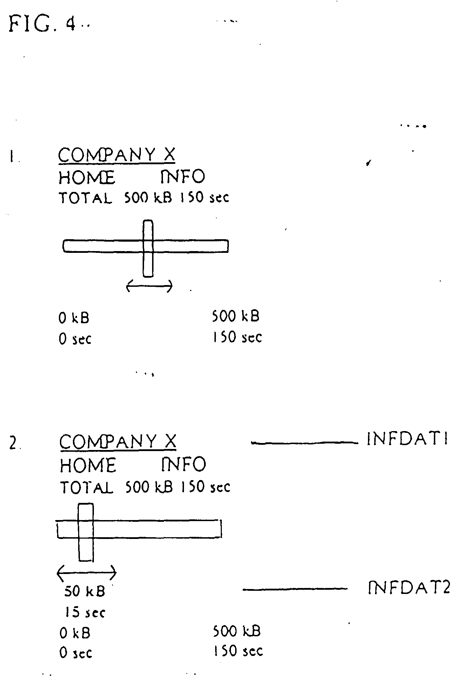

Figur 4 zeigt ein erstes Informationselement COMPANY X mit den Zusatzinformationen HOME und INFO. Weiterhin ist die Gesamtkapazität (TOTAL) der durch Markierung von COMPANY X abufbaren WEB-SEITE(n), nämlich 500 kB, sowie die voraussichtliche Übertragungszeit, nämlich 150 sec, bei einer angenommenen Übertragungsgeschwindigkeit angegeben. Schließlich enthält die Anzeige ein Symbol, das aus einem horizontalen Rechteck (Balken) und aus einem darüber angeordneten vertikalen Rechteck sowie aus zwei Pfeilen besteht Die Pfeilen symbolisieren die Verschiebbarkeit des vertikalen Rechtecks auf dem horizontalen Balken. Unterhalb des Balkens ist links 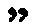 0 kB, 0 sec" und rechts 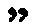 500 KB, 150 sec" angegeben.

Durch Verschiebung des vertikalen Rechtecks und dessen Positionierung mittels der Maus wird eine Information INFDAT2 gebildet, die eine vorgebbare Datenkapazität (z.B. 50 kB in Figur 4,2) und/oder eine vorgebbare Übertragungszeit (z.B. 15 sec) bezeichnet, und gegebenenfalls wird zugleich eine Information INFDAT1 gebildet, die eine erste Datei bezeichnet. Diese Datei beinhaltet Daten der COMPANY X zugeordneten WEB-Seite(n).

Gegebenenfalls wird durch separate Markierung von COMPANY X die Information INFDAT1 gebildet.

Die Informationen INFDAT1, INFDAT2 werden von dem Datenabruf-Endgerät (1 in den Figuren 1 und 2) im Rahmen einer Datenabrufprozedur an die Datenbank (2 in den Figuren 1 und 2) oder an eine Datenverarbeitungsanlage (SERVER, 3) übermittelt. Die Datenbank (2) und/oder die Datenverarbeitungsanlage (SERVER, 3 in den Figuren 1 und 2) überträgt zu dem Datenabruf-Endgerät (1) Daten der ersten Datei, wobei die Kapazität (maximal) dieser Daten gleich der Datenkapazität ist; die durch die zweite Information INFDAT2 bezeichnet ist.

Dabei kann ein Steuerungsprogramm des der Datenbank zugeordneten Steuerwerks (2C in Figur 2) in Abhängigkeit der von dem Datenabruf-Endgerät übermittelten zweiten Information INFDAT2 zu übertragende Daten aus der ersten Datei selektieren und/oder bilden.

In Figur 4 ist weiterhin noch ein 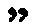 Knopf" K dargestellt; durch dessen Markierung mit der Maus eine Verknüpfung mehrerer erster Informationselemente ermöglicht wird. Beispielsweise lassen sich Daten der WEB-Seiten, die COMPANY X zugeordnet sind, mit Daten verbinden, die beispielsweise einem ersten Informationselement COMPANY Y bzw. dessen WEB-Seite(n) zugeordnet sind. Ebenso lassen sich beispielsweise Videosequenzen (Videos, Clips) mit Tonsequenzen (z.B. Musik) verknüpfen.

Bei allen Ausführungsformen des erfindungsgemäßen Systems und Verfahrens können die ersten Informationselemente (z.B. COMPANY X) mindestens zwei Teile (COM, PANY X) aufweisen, die individuell markierbar sind. Diese individuellen Markierungen von Informationselementteilen führen zu der Anzeige zweiter Informationselemente (ADDINF1, ...) und/oder zu einer Verbindung zu der Datenbank (2). Weitere Beispiele der beiden Teile sind C, OMPANY X; CO MPANY X; COMP ANY X, etc., wobei der Anzeigeunifang (Datenmenge) der zweiten Informationselanente in Abhängigkeit der Ausgestaltung beider Teile festgesetzt werden kann. So ist der Aneigeumfang, der C in einem Beispiel zugeordnet ist, vergleichsweise gering, während der Anzeigeumfang, der COMP in einem anderen Beispiel zugeordnet ist, vergleichsweise groß ist. Die unterschiedlichen Teile C, OMPANY X, etc. sind für den Benutzer insbesondere immer dann auf der optischen Anzeigeeinrichtung (11 in den Figuren 1 und 2) erkennbar, wenn mit der Maus COMPANY X überstrichen bzw. markiert wird.

Die Erfindung betrifft auch ein Verfahren zum Abruf von Daten in den vorstehend beschriebenen Ausführungsformen des erfindungsgemäßen Systems.

### BEZUGSZEICHENLISTE

- 1: Datenabruf-Endgerät, Personal Computer
- 11: Optische Anzeigeeinrichtung, Monitor
- 12, 13: Dateneingabe-Einrichtungen, Tastatur, Maus
- 1MP: Steuerwerk von 1
- 2: Datenbank
- 2C: Steuerwerk von 2
- 2MEM: Speicher von 2
- 3: Server
- LINK: erstes Informationselement
- ADDINF1, ADDINF2, ...: zweite Informationselemente
- INFDAT1: erste Information
- INFDAT2: zweite Information

## Patentansprüche

1. System zum Abruf von Daten aus einer Datenbank (2), insbesondere im Internet, mit einem Datenabruf-Endgerät (1), das eine optische Anzeige-Einrichtung (11) und mindestens eine Dateneingabe-Einrichtung (12, 13) aufweist, wobei das Datenabruf-Endgerät (1) ein Steuerwerk (1MP) mit einem zugeordneten Steuerungsprogramm aufweist, das in der Weise ausgestaltet ist, daß auf der optischen Anzeige-Einrichtung (11) erste Informationselemente (LINK) anzeigbar sind, daß die ersten Informationselemente (LINK) mittels der mindestens einen Dateneingabe-Einrichtung (12, 13) durch eine erste Markierung markierbar sind, daß ausgelöst durch die erste Markierung eines ersten Informationselements (LINK) eine Verbindung zu der Datenbank (2) hergestellt wird, Daten aus der Datenbank (2) abgerufen und zu dem Datenabruf-Endgerät (1) übertragen werden, oder daß ausgelöst durch die erste Markienrung der ersten Informationselemente (LINK) anstelle einer Verbindung zu der Datenbank (2) zweite Informationselemente (ADDINF1, ADDINF2, ...) auf der optischen Anzeige-Einrichtung (11) angezeigt werden.
**dadurch gekennzeichnet,**
daß das Steuerungsprogramm in der Weise ausgestaltet ist, daß ausgelost durch eine zweite Markierung eines zweiten Informationselements (ADDINF1) eine Verbindung zu der Datenbank (2) hergestellt wird, Daten aus der Datenbank (2) abgerufen und zu dem Datenbruf-Endgerät (1) übertragen werdet.

2. System nach einem der vorstehenden Ansprüche, dadurch gekennzeichnet, daß das Steuerungsprogramm in der Weise ausgestaltet ist, daß die ersten Informationselemente mindestens zwei Teile aufweisen, die individuell markierbar sind, und daß individuelle Markierungen von Informationselementteilen zu der Anzeige zweiter Informationselemente (ADDINF1, ...) und/oder zu einer Verbindung zu der Datenbank (2) führen.

3. System nach Anspruch 3, dadurch gekennzeichnet, daß das Steuerungsprogramm in der Weise ausgestaltet ist, daß individuelle Markienrungen von Informationselementteilen zu der Anzeige zweiter Informationselemente (ADDINF1, ...) unterschiedlicher Informationsmenge führen.

4. Verfahren zum Abruf von Daten aus einer Datenbank (2), insbesondere im Internet, in einem System mit einem Datenabruf-Endgerät (1), das eine optische Anzeige-Einrichtung (11) und mindestens eine Dateneingabe-Einrichtung (12, 13) aufweist, wobei das Datenabruf-Endgerät (1) ein Steuerwerk (1MP) mit einem zugeordneten Steuerungsprogramm aufweist, das in der Weise ausgestaltet ist, daß auf der optischen Anzeige-Einrichtung (11) erste Informationselemente (LINK) anzeigbar sind, daß die ersten Informationselemente (LINK) mittels der mindestens einen Dateneingabe-Einrichtung (12, 13) durch eine erste Markierung markierbar sind, daß ausgelost durch die erste Markierung eines ersten Informationselements (LINK) eine Verbindung zu der Datenbank (2) hergestellt wird, Daten aus der Datenbank (2) abgerufen und zu dem Datenabruf-Endgerät (1) übertragen werden, oder daß ausgelost durch die erste Markierung der ersten Informationselemente (LINK) anstelle einer Verbindung zu der Datenbank (2) zweite Informationselemente (ADDINF1, ADDINF2, ...) auf der optischen Anzeige-Einrichtung (11) angezeigt werden.
**dadurch gekennzeichnet,**
daß ausgelöst durch eine zweite Markierung eines zweiten Informationselements (ADDINF1) eine Verbindung zu der Datenbank (2) hergestellt wird, Daten aus der Datenbank (2) abgerufen und zu dem Datenabruf-Endgerät (1) übertragen werden..

5. Verfahren nach einem der Ansprüche 7 oder 8, dadurch gekennzeichnet; daß die ersten Informationselemente mindestens zwei Teile (COM, PANY X) aufweisen, die individuell markierbar sind, und daß individuelle Markierungen von Informationselementteilen zu der Anzeige zweiter Informationselemente (ADDINF1, ...) und/oder zu einer Verbindung zu der Datenbank (2) führen.

6. Verfahren nach Anspruch 9, dadurch gekennzeichnet, daß das Steuerungsprogramm in der Weise ausgestaltet ist; daß individuelle Markienrungen von Informationselementteilen zu der Anzeige zweiter Informationselemente (ADDINF1, ...) unterschiedlicher Informationsmenge führen.

7. System zum Abruf von Daten aus einer Datenbank (2), insbesondere im Internet, mit einem Datenabruf-Endgerät (1), das eine optische Anzeige-Einrichtung (11) und mindestens eine Dateneingabe-Einrichtung (12, 13) aufweist, wobei das Datenabruf-Endgerät (1) ein Steuerwerk (1MP) mit einem zugeordneten Steuerungsprogramm aufweist, das in der Weise ausgestaltet ist, daß das Datenabruf-Endgerät (1) im Rahmen einer Datenabrufprozedur eine erste Information (INFDAT1) an die Datenbank (2) übermittelt, die eine vorgebbare erste Datei bezeichnet,
**dadurch gekennzeichnet,**
daß das Steuerungsprogramm weiterhin in der Weise ausgestaltet ist; daß das Datenabruf-Endgerät (1) im Rahmen einer Datenabrufprozedur eine zweite Information (INFDAT2) an die Datenbank (2) oder an eine Datenverarbeitungsanlage (SERVER, 3) übermittelt, welche Information eine vorgebbare Datenkapazität der ersten vorgebbaren Datei und/oder eine Übertragungszeit für die Übertragung von Daten der ersten vorgebbaren Datei bezeichnet, und daß von der Datenbank (2) und/oder von der Datenverarbeitungsanlage (SERVER, 3) zu dem Datenabruf-Endgerät (1) Daten der ersten Datei übermittelt werden, deren Kapazität maximal gleich der Datenkapazität ist, die durch die zweite Information (INFDAT2) bezeichnet ist.

8. System nach Anspruch 13, dadurch gekennzeichnet; daß ein der Datenbank zugeordnetes Steuerwerk (2C) in Abhängigkeit der von dem Datenabruf-Endgerät (1) übermittelten zweiten Information (INFDAT2) Daten aus der ersten Datei selektiert und/oder bildet; deren Kapazität maximal gleich der Datenkapazität ist, die durch die zweite Information (INFDAT2) bezeichnet ist.

9. Verfahren zum Abruf von Daten aus einer Datenbank (2), insbesondere im Internet, in einem System mit einem Datenabruf-Endgerät (1), das eine optische Anzeige-Einrichtung (11) und mindestens eine Dateneingabe-Einrichtung (12, 13) aufweist; wobei das Datenabruf-Endgerät (1) ein Steuerwerk (1MP) mit einem zugeordneten Steuerungsprogramm aufweist, das in der Weise ausgestaltet ist, daß das Datenabruf-Endgerät (1) im Rahmen einer Datenabrufprozedur eine erste Information (INFDAT1) an die Datenbank (2) übermittelt; die eine vorgebbare erste Datei bezeichnet,
**dadurch gekennzeichnet,**
daß das Datenabruf-Endgerät (1) im Rahmen einer Datenabrufprozedur eine zweite Information (INFDAT2) an die Datenbank (2) oder an eine Datenverarbeitungsanlage (SERVER, 3) übermittelt; welche Information eine vorgebbare Datenkapazität der ersten vorgebbaren Datei und/oder eine Übertragungszeit für die Übertragung von Daten der ersten vorgebbaren Datei bezeichnet, und daß von der Datenbank (2) und/oder von der Datenverarbeitungsanlage (SERVER, 3) zu dem Datenabruf-Endgerät (1) Daten der ersten vorgebbaren Datei übermittelt werden, deren Kapazität maximal gleich der Datenkapazität ist, die durch die zweite Information (INFDAT2) bezeichnet ist.

10. Verfahren nach Anspruch 15, dadurch gekennzeichnet; daß ein der Datenbank zugeordnetes Steuerwerk (2C) in Abhängigkeit der von dem Datenabruf-Endgerät (1) übermittelten zweiten Information (INFDAT2) Daten aus der ersten vorgebbaren Datei selektiert und/oder bildet; deren Kapazität maximal gleich der Datenkapazität ist, die durch die zweite Information (INFDAT2) bezeichnet ist.
